# EUROPEAN PATENT SPECIFICATION

(11) **EP 3 535 721 B1**
(45) Date of publication and mention of the grant of the patent: **27.05.2026**
(21) Application number: 17791792.9
(22) Date of filing: 11.10.2017
(51) Int. Cl.: G06Q 20/00, G06Q 20/02, G06Q 20/40

(54) **SYSTEM AND METHOD FOR PROCESSING PAYMENT TRANSACTIONS AT NETWORK EDGE NODES**
SYSTEM UND VERFAHREN ZUR VERARBEITUNG VON ZAHLUNGSTRANSAKTIONEN IN NETZRANDKNOTEN
SYSTÈME ET PROCÉDÉ DE TRAITEMENT DE TRANSACTIONS DE PAIEMENT AU NIVEAU DE NOEUDS PÉRIPHÉRIQUES D'UN RÉSEAU

(30) Priority: 02.11.2016 US 201615341651
(43) Date of publication of application: 11.09.2019
(73) Proprietor: Mastercard International Incorporated, Purchase, New York 10577 (US)
(72) Inventor: HOSNY, Ahmed, Portloaise Laois D18 (IE); ATKINS, Michael C., Cookeville, TN 38501 (US); GROARKE, Peter, Dublin 18 (IE)
(74) Representative: Fountain, Sullivan
(86) International application number: PCT/US2017/056006
(87) International publication number: WO 2018/085010

(56) References cited:
- US-A1- 2003 126 094
- US-A1- 2012 296 824
- US-A1- 2013 013 512
- US-A1- 2014 201 076
- US-A1- 2015 039 506
- US-A1- 2015 127 547

## Description

### CROSS-REFERENCE TO RELATED APPLICATION

This application claims the benefit of, and priority to, U.S. Patent Application No. 15/341,651 filed on November 2, 2016.

### BACKGROUND

The field of the invention relates generally to data processing in computer networks, and more particularly to systems and methods for processing data messages at edge nodes of a network.

Computing devices are oftentimes connected together so that one computing device is able to communicate with another computing device. In many cases, multiple computing devices are connected in such a manner that allows many different computing devices to communicate with many other computing devices. These communication links are typically referred to as networks. Thus, a network may consist of two or more computers that are communicatively linked together in order to share resources (e.g., printers, CDs, etc.), exchange files, or allow electronic communications. The computers on a network may be linked through cables, telephone lines, radio waves, satellites, or infrared light beams.

The topology of a computer network may be broadly described in terms of nodes and links. Each node generally corresponds to a computing device of the network and each link generally corresponds to a communication link between two nodes. An "edge node" is a particular type of node that acts as a bridge between a network and an external system, which may be an individual computing device or system or an external network including multiple computing devices.

Oftentimes data processing-analytics, data evaluation, etc.-is performed at a central node in a computer network, referred to herein as a "central hub". Data processing may be offered as a service by a data processor to owners and operators of computing devices within a network, each of which may correspond to a separate edge node of the network. For example, in the payment processing industry, payment processors may act as data processors that provide data processing services to acquirers and issuing banks, each of which correspond to edge nodes of an interchange network corresponding to the payment processor. Such data processing services may be in addition to or enhance payment processing services provided by the payment processor and may include, but are not limited to, fraud detection services, virtual card number services, loyalty program services, money transfer services, and monitoring services.

Although processing data at a central hub provides some benefits in terms of capital and operational efficiency, centralization carries several significant drawbacks. For example, centralization requires transmission of data from its origin to the central hub for processing and from the central hub to the ultimate destination of the data after processing is completed. Such detours contribute to the overall time required for delivery of the data and the amount of network bandwidth required to complete the delivery. In addition to network-related issues, centralized data processing may not be possible due to regulatory issues. For example, in the financial or insurance area, a country may have laws or regulations requiring that all payment data originating within the country be processed within the country. As a result, payment processors and insurance companies must face the choice of choosing not to process payment data within the country (foregoing opportunities associated with offering such services) or to expend additional capital to establish country-specific data processing systems.

Accordingly, it is desirable to have a system that enables data processing in a computer network with improved speed and network efficiency while avoiding problems associated with cross-border processing.

### BRIEF DESCRIPTION OF THE DISCLOSURE

In one aspect, an edge node computing system for processing data communicated over a computer network is provided. The edge node computing system includes: a primary processor located at the first edge node and configured to receive an authorization request message representing a payment transaction initiated by a cardholder with a merchant, to perform a primary processing on the authorization request message, and to determine that the transaction is subject to a secondary processing; and a secondary processor located at the first edge node and configured to receive the authorization request message from the primary processor, to perform a second processing on the authorization request message, to generate an enhanced authorization request message based on a result of the second processing and the authorization request message, and transmit the enhanced authorization request message.

In another aspect, a computer-implemented method processing data communicated over a computer network is provided. The method is implemented by a travel booking information computing device and includes: receiving, at a primary processor located at the first edge node, an authorization request message representing a payment transaction initiated by a cardholder with a merchant; performing, by the primary processor, a primary processing on the authorization request message; determining, by the primary processor, that the transaction is subject to a secondary processing; receiving, at a secondary processor located at the first edge node, the authorization request message from the primary processor; performing, by the secondary processor, a second processing on the authorization request message; generating, with the secondary processor, an enhanced authorization request message based on a result of the second processing and the authorization request message; and transmitting, by the secondary processor, the enhanced authorization request message.

In another aspect, a non-transitory computer-readable storage media having computer-executable instructions embodied thereon is provided. When executed by at least one processor, the computer-executable instructions cause the at least one processor to: receive, at a primary processor located at the first edge node, an authorization request message representing a payment transaction initiated by a cardholder with a merchant; perform, by the primary processor, a primary processing on the authorization request message; determine, by the primary processor, that the transaction is subject to a secondary processing; receive, at a secondary processor located at the first edge node, the authorization request message from the primary processor; perform, by the secondary processor, a second processing on the authorization request message; generate, with the secondary processor, an enhanced authorization request message based on a result of the second processing and the authorization request message; and transmit, by the secondary processor, the enhanced authorization request message.

### BRIEF DESCRIPTION OF THE DRAWINGS

FIG. 1 is a schematic diagram illustrating an example of a multi-party payment processing system for processing payment card transactions including edge node computing systems for performing data processing.
FIG. 2 is a diagram illustrating an edge node computing system in accordance with an example embodiment of the present disclosure.
FIG. 3 is a diagram illustrating a first computer network including an edge node computing system, such as the edge node computing system of FIG. 2.
FIG. 4 is a diagram illustrating a second computer network including two edge node computing systems, each of which generally correspond to the edge node computing system of FIG. 2.
FIG. 5 is a diagram illustrating a third computer network including two edge node computing systems and a central hub, each of the edge node computing systems correspond to the edge node computing system of FIG. 2,
FIG. 6 is a diagram illustrating an example of a computer-implemented method for processing data communicated over a computer network in accordance with an example embodiment of the present disclosure.

### DETAILED DESCRIPTION OF THE DISCLOSURE

Embodiments of the present invention relate generally to an edge node computing system for processing data communicated over a computer network. In contrast to known centralized systems, the edge node computing system is generally located at an edge node of a network and performs data processing at the edge node. In the context of a payment processing network, for example, the edge node computing system may correspond to one of an acquirer and an issuing bank. More specifically, the edge node computing system may be incorporated into or communicatively coupled to an acquirer or issuing bank computing system corresponding to an edge node of an interchange network.

Edge node computing systems according to embodiments of the present invention may generally include a first processor and a second processor. The first processor receives messages, such as authorization request messages, corresponding to transactions initiated by cardholders and analyzes the messages to determine whether additional data processing, generally referred to herein as secondary processing or secondary data processing, is to be performed on the messages. To the extent secondary processing is to be performed on a message, the first processor forwards the message to the second processor which then performs the secondary processing. The second processor may then generate an enhanced authorization request message based on the original authorization request message and the result of the secondary processing and transmit the enhanced authorization request message accordingly.

In certain embodiments, the edge node computing system may correspond to an acquirer. In such embodiments, the edge node computing system may receive authorization request messages from one or more merchants. To the extent the first processor determines that an authorization request message is to be subject to secondary processing, the first processor may forward the authorization request message to the second processor that then performs the secondary processing and generates an enhanced authorization request message. The second processor may then transmit the enhanced authorization request message over the network. For example, the second processor may transmit the enhanced authorization request message to an issuing bank. In other embodiments, the edge node computing system may correspond to an issuing bank and receive authorization request messages from the network. To the extent the edge node computing system performs secondary processing and generates enhanced authorization request messages, the edge node computing system may forward the enhanced authorization request messages to another computer system associated with the issuer.

A network may include more than one edge node with each edge node being associated with a different edge node computing system. In such systems, secondary processing may be distributed across multiple edge node computing systems. That is, one edge node computing system may perform a first secondary processing function before sending an enhanced message to a second edge node computing system that performs a second secondary processing function. For example, a network may include a first edge node computing system corresponding to an acquirer and a second edge node computing system corresponding to an issuing bank. In response to receiving an authorization request message, the first edge node computing system may perform a first secondary processing function relevant to the acquirer, generate an enhanced authorization request message, and transmit the enhanced authorization request message to the second edge node computing system. The second edge node computing system may then perform a second secondary processing function relevant to the issuing bank on the enhanced authorization request message, generate a further enhanced authorization request message, and transmit the further enhanced authorization request message accordingly.

The network may also include a central hub that performs secondary processing functions. For example, the network may include a central hub that receives enhanced authorization request messages from a plurality of edge node computing systems. The central hub may then perform secondary processing functions on the enhanced authorization request messages and route the messages accordingly. Alternatively, the central hub may perform secondary processing on authorization request messages, generated enhanced authorization request messages, and transmit enhanced authorization request messages to an edge node computing system. The edge node computing system may then perform additional secondary processing on the enhanced authorization message, generate further enhanced authorization messages, and transmit the further enhanced authorization messages accordingly.

### EXAMPLE OF PAYMENT CARD TRANSACTION NETWORK

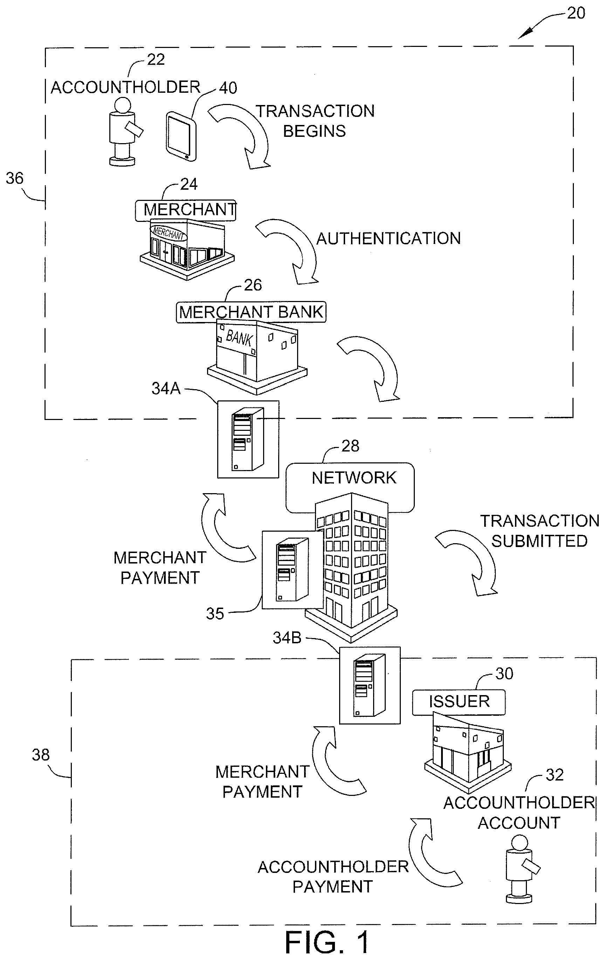

FIG. 1 is a schematic diagram illustrating an example multi-party transaction card industry system 20 for authorizing payment card transactions in communication with edge node computing systems 34A and 34B. Embodiments described herein may relate to a transaction card system, such as a payment card payment system using the MasterCard^{®} interchange network. The MasterCard^{®} interchange network is a set of proprietary communications standards promulgated by MasterCard International Incorporated for the exchange of financial transaction data and the settlement of funds between financial institutions that are associated with MasterCard International Incorporated. (MasterCard is a registered trademark of MasterCard International Incorporated located in Purchase, New York).

In a typical transaction card system, a financial institution referred to as the "issuer" issues a transaction card, such as a credit card, debit card, and the like, to the consumer or account holder 22, who uses the transaction card to tender payment for a purchase from merchant 24. To accept payment with the transaction card, merchant 24 normally establishes an account with a financial institution that is part of the financial payment system. This financial institution is referred to as the "merchant bank," the "acquiring bank," or the "acquirer." In one embodiment, account holder 22, also referred to as cardholder, tenders payment for a purchase using a transaction card at a transaction processing device 40 (e.g., a point of sale device), and merchant 24 then requests authorization from a merchant bank 26 for the amount of the purchase. The request is usually performed through the use of a point-of-sale terminal, which reads account information from a magnetic stripe, a chip, embossed characters, and the like, included on the transaction card of the account holder 22 and communicates electronically with the transaction processing computers of merchant bank 26. Alternatively, merchant bank 26 may authorize a third party to perform transaction processing on its behalf. In this case, the point-of-sale terminal may be configured to communicate with the third party. Such a third party may be referred to as a "merchant processor," an "acquiring processor," or a "third party processor."

Using an interchange network 28, computers of merchant bank 26 or merchant processor may communicate with computers of an issuer bank 30 to determine whether account 32 of account holder 22 is in good standing and whether the purchase is covered by an available credit line of the account 32 corresponding to account holder 22. Based on these determinations, the request for authorization may be declined or accepted. If the request is accepted, an authorization code may be issued to merchant 24.

When a request for authorization is accepted, the available credit line of the account holder 22 is decreased, that is, account 32 is decreased. A charge for a payment card transaction may not be posted immediately to account 32 of the account holder 22 because payment networks, such as MasterCard International Incorporated, may have promulgated rules that do not allow merchant 24 to charge, or "capture," a transaction until goods are shipped or services are delivered. However, with respect to at least some debit card transactions, a charge may be posted at the time of the transaction. When merchant 24 ships or delivers the goods or services, merchant 24 captures the transaction by, for example, appropriate data entry procedures on the point-of-sale terminal. This may include bundling of approved transactions daily for standard retail purchases. If account holder 22 cancels a transaction before it is captured, a "void" is generated. If account holder 22 returns goods after capture of the transaction, a "chargeback" is generated. Interchange network 28 and/or issuer bank 30 stores the transaction card information, such as a type of merchant, amount of purchase, date of purchase, in a database.

After a purchase has been made, a clearing process occurs to transfer additional transaction data related to the purchase among the parties to the transaction, such as merchant bank 26, interchange network 28, and issuer bank 30. According to various aspects herein, during the clearing process, additional data (*i.e.,* addendum data), may be added to the transaction data. Accordingly, addendum data may be associated with a transaction and transmitted between parties to the transaction as transaction data, and may be stored by any of the parties to the transaction.

After a transaction is authorized and cleared, the transaction may be settled among merchant 24, merchant bank 26, and issuer bank 30. Settlement refers to the transfer of financial data or funds among merchant 24's account, merchant bank 26, and issuer bank 30 related to the transaction. Usually, transactions are captured and accumulated into a "batch," which is settled as a group. More specifically, a transaction is typically settled between issuer bank 30 and interchange network 28, and then between interchange network 28 and merchant bank 26, and then between merchant bank 26 and merchant 24.

A multi-party transaction card industry system may include multiple computer networks and sub-networks. For example, in addition to interchange network 28, multi-party transaction card industry system 20 may include a merchant network 36 and an issuing bank network 38. Each of merchant network 36 and issuing bank network 38 may be connected to interchange network 28 through edge node computing systems, such as edge node computing systems 34A and 34B, which connect interchange network 28 to merchant network 36 and issuing bank network 38, respectively.

Edge node computing systems 34A and 34B generally correspond to edge nodes of interchange network 28. Interchange network 28 may also include other nodes, including nodes corresponding to additional computing devices or systems within interchange network 28. For example, interchange network 28 may include a node corresponding to a central hub 35. Interchange network 28 may also include additional edge nodes connecting interchange network 28 to other computer networks and systems external to interchange network 28.

During operation, edge node computing systems 34A and 34B provide an interface between merchant and issuing bank networks 36 and 38 and interchange network 28. In certain embodiments, edge node computing systems may be configured to send and receive messages over an interchange network. For example, edge node computing device 34 may receive messages containing transaction data from merchant bank 26 and send the received messages to issuing bank 30 over interchange network 28. Edge node computing system 34A may analyze a message and its data to determine the required destination and other routing parameters. Edge node computing system 34A may also determine if the message is subject to secondary processing, may perform such secondary processing, and may supplement or modify the message with results of the secondary processing prior to transmission. For example, edge node computing system 34A may determine that a message is subject to secondary processing corresponding to a fraud detection service. Edge node computing system 34A may then perform the fraud detection service, populate a field of the message with a value indicating the result of the fraud detection service, and transmit the message to issuing bank 30. A similar process may be applied to message sent by issuer 30 over interchange network 28. Specifically, messages sent by issuer 30 may be subject to analysis and subsequent secondary processing by edge node computing system 34B.

In certain embodiments, edge node computing systems may also be configured to receive messages sent over an interchange network. For example, edge node computing system 34B may receive a message sent to issuer 30 over interchange network 28. Edge node computing system 34B may then analyze the message to determine whether secondary processing of the message is required prior to forwarding the message to issuer 30. If secondary processing is required, edge node computing system 34B may perform any such secondary processing and may supplement or modify the message with results of the secondary processing prior to transmission. A similar process may be applied to messages sent to merchant bank 26 over interchange network 28. Specifically, messages sent to merchant bank 26 may be subject to analysis and subsequent secondary processing by edge node computing system 34A.

### EXAMPLE OF AN EDGE NODE COMPUTING SYSTEM

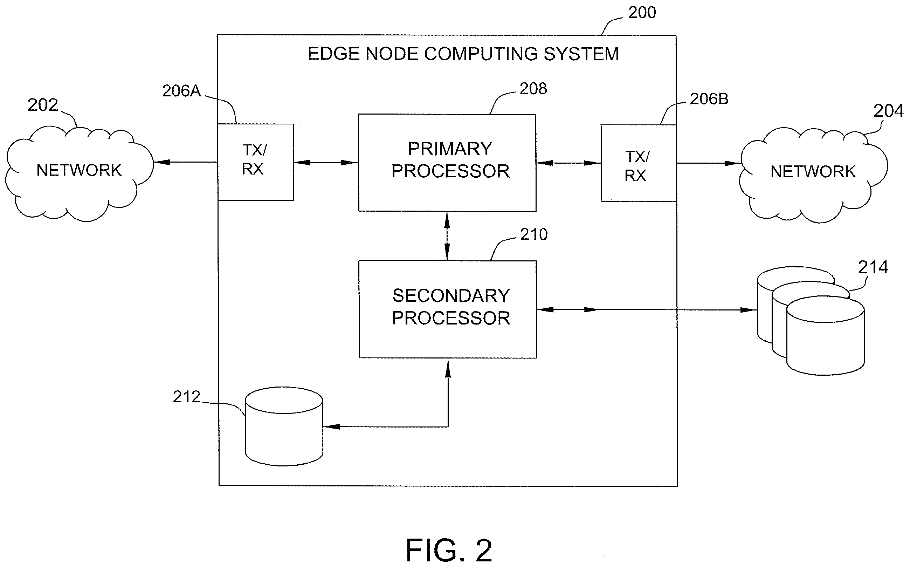

FIG. 2 is a diagram illustrating an edge node computing system 200, which may correspond to one of edge node computing systems 34A and 34B of FIG. 1. Edge node computing system 200 may correspond to an edge node of a first network 202 between first network 202 and a second network 204. To communicate with each of first network 202 and second network 204, edge node computing system 200 may include interfaces or transmitter/receivers 206A, 206B configured to transmit and receive messages over first network 202 and second network 204, respectively. In certain embodiments, first network 202 may correspond to an interchange network, such as interchange network 28 of FIG. 1. In certain embodiments, second network 204 may correspond to one of an acquirer network or an issuing bank network, such as merchant network 36 and issuer network 38 of FIG. 1. Second network 204 generally corresponds to a computer network including multiple communicatively coupled computing devices and systems; however, second network 204 may also correspond to a single computing device or system communicatively coupled to edge node computing system 200. Although edge node computing system 200 is depicted in FIG. 2 as being connected to only first network 202 and second network 204, edge node computing system 200 may be coupled to multiple computer networks. Accordingly, each of first network 202 and second network 204 may correspond to a plurality of computer networks.

Edge node computing system 200 may further include a primary processor 208 and a secondary processor 210. Primary processor 208 may be generally configured to receive messages transmitted over one of first network 202 and second network 204 and to analyze the contents of such messages. If primary processor 208 determines that a message is subject to secondary processing, primary processor 208 may forward the message, in whole or in part, to secondary processor 210 for secondary processing.

Primary processor 208 may determine whether to forward a message to secondary processor 210. To do so, primary processor 208 may analyze data contained in a received message and, based on the data, determine whether secondary processing is required for the message. In certain embodiments, primary processor 208 may analyze one or more of a data field, a flag, an indicator, and the like, specifically used for indicating whether the message is subject to secondary processing. In other embodiments, primary processor 208 may analyze other data contained in the message, such as the source or destination of the message, to determine whether the message is subject to secondary processing. In the context of messages related to financial transactions, for example, an issuing bank may subscribe to a fraud detection service for transactions performed by the issuing bank's cardholders. Accordingly, if primary processor 208 receives an authorization request message to be sent to the issuing bank, primary processor 208 may forward the authorization request message to secondary processor 210 for secondary processing corresponding to the fraud detection service. In another example in the context of financial transactions, primary processor 208 may determine whether a message is subject to secondary processing based on data included in the message corresponding to characteristics of an underlying transaction including, but not limited to, the amount of the transaction, whether the transaction was domestic or international, the date and time of the transaction, the location of the transaction, whether the transaction was an online transaction, and the type of merchant taking part in the transaction.

If primary processor 208 determines that secondary processing is required for a message, primary processor 208 may forward the message or a portion of its contents to secondary processor 210 for secondary processing. Secondary processing generally corresponds to data processing beyond that which is involved in simply routing a message. For example, in the payment processing industry, secondary processing may correspond to one or more of fraud detection, virtual card services, purchase tracking services, and the like. Data processing services corresponding to secondary processing may be referred to as value added services as they provide additional value to the party requesting the service.

In certain embodiments, secondary processor 210 may perform secondary processing based on data contained in a message received from primary processor 208. In other embodiments, secondary processor 210 may also perform secondary processing using data retrieved from additional data sources. Such data sources may be part of edge node computing system 200, such as internal data source 212, or may also be external to edge node computing system 200 but otherwise accessible to secondary processor 210, such as external data source 214. Secondary processor 210 may be configured to directly access external data source 214 or to access external data source through a computer network, such as first network 202 or second network 204.

When secondary processor 210 has completed secondary processing of a message, secondary processor 210 may generate an enhanced message based on the result of the secondary processing. For clarity, the message received by secondary processor 210 from primary processor 208 is referred to as the original message. Secondary processor 210 may generate the enhanced message by supplementing or otherwise modifying the original message, such as by inserting data into the original message, changing existing data contained in the original message, deleting data from the original message, and the like.

In certain embodiments, secondary processor 210 may modify an original message by changing routing data, such as the destination of the original message, based on the outcome of the secondary processing. For example, secondary processor 210 may provide fraud detection services for financial transactions. During such a transaction, a merchant or merchant bank may generate an authorization request message and may transmit the authorization request message to an issuing bank over an interchange network. Primary processor 208 may receive the authorization request message and forward it to secondary processor 210 for additional data processing related to fraud detection. If secondary processor 210 determines that the transaction is likely to be fraudulent, secondary processor 210 may generate an enhanced authorization request message by inserting data into the authorization request message indicating that the transaction is likely fraudulent and has been declined and by changing the routing information of the authorization request message to redirect the message back to one of the merchant and the merchant bank.

After secondary processor 210 generates an enhanced message, secondary processor 210 may transmit the enhanced message in accordance with the routing instructions associated with the enhanced message. In the embodiment depicted in FIG. 2, secondary processor 210 may transmit the enhanced message to primary processor 208 which may then forward it to one of first network 202 and second network 204. In other embodiments, secondary processor 210 may be able to transmit enhanced messages to one of first network 202 and second network 204 without first forwarding the message to primary processor 208. For example, secondary processor 210 may be communicatively coupled to one of transmitter/receivers 206A, 206B and may transmit enhanced messages via one of transmitter/receivers 206A, 206B directly.

### EXAMPLES OF DATA PROCESSING SYSTEMS INCL UDING EDGE NODE COMPUTING SYSTEMS

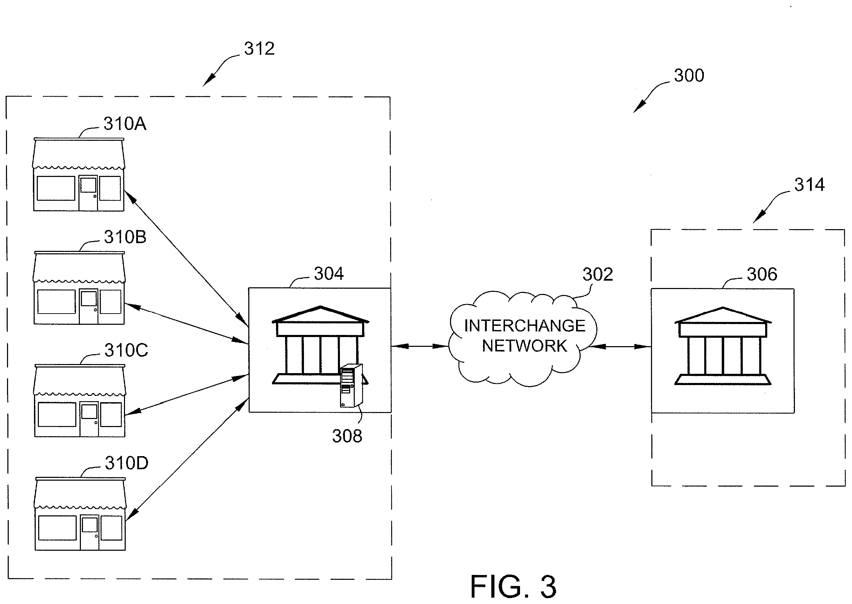

FIGS. 3-5 depict different embodiments of data processing systems having one or more edge node computing systems, each of which may correspond to edge node computing system 200 of FIG. 2. For clarity and context, the data processing systems depicted in FIGS. 3-5 are generally discussed in the context of payment transaction networks, such as multi-party transaction card industry system 20 of FIG. 1.

FIG. 3 depicts a data processing system 300 in accordance with one embodiment of the present disclosure. Data processing system 300 includes an interchange network 302, an acquirer computing system 304, and an issuing bank computing system 306. Acquirer computing system 304 further includes an edge node computing system 308 and is communicatively coupled to merchants 310A-D. Acquirer computing system 304 and merchants 310A-D are generally part of an acquirer network 312. Similarly, issuing bank computing system 306 may be part of an issuing bank network 314.

For explanatory purposes, a payment transaction is assumed to be initiated at merchant 310A, however, the following description is generally applicable to payment transactions initiated at any of merchants 310B-D as well. When a payment transaction is initiated between a consumer and merchant 310A, merchant 310A generates an authorization request message. Authorization request messages generally include basic information corresponding to the transaction. During transaction processing, authorization request messages are generally sent from a merchant to an acquirer and across an interchange network to an issuing bank. The issuing bank may then analyze the data contained in the authorization request message and determine whether to authorize the transaction, for example, by determining that the account holder has sufficient funds or credit for the transaction. The issuing bank may then transmit an authorization response message back to the merchant via the interchange network and the acquirer.

Referring back to the embodiment depicted in FIG. 3, an authorization request message or other message generated by merchant 310A is first sent to acquirer computing system 304 and, more specifically, edge node computing system 308. Prior to transmitting the authorization request message over interchange network 302, edge node computing system 308 may analyze the authorization request message to determine whether the authorization request message is subject to secondary processing. If the authorization request message is not subject to secondary processing, edge node computing system 308 may transmit the authorization request message to issuing bank computing system 306 over interchange network 302. If, on the other hand, edge node computing system 308 determines that the authorization request message is subject to secondary processing, edge node computing system 308 may perform any required secondary processing and generate an enhanced authorization request message based on the results of the secondary processing. Edge node computing system 308 may then transmit the enhanced authorization request message accordingly.

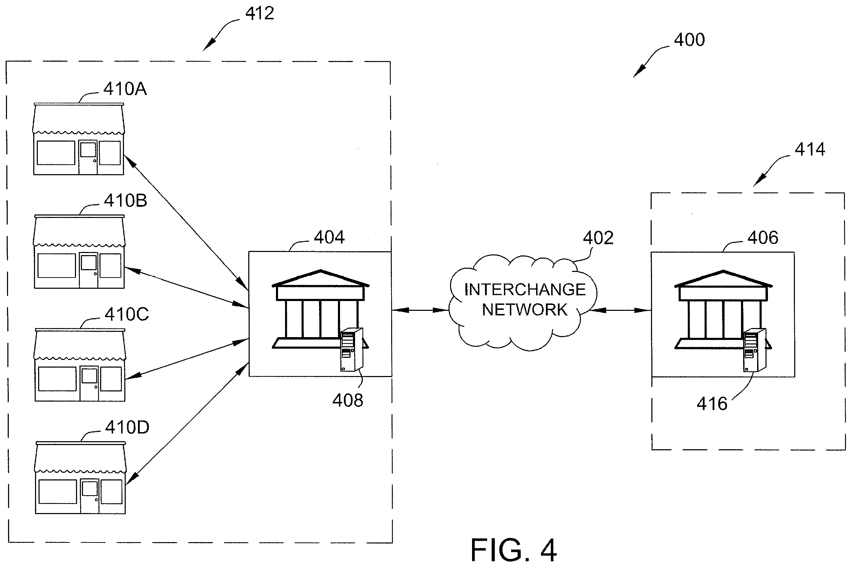

FIG. 4 depicts a second embodiment of a data processing system in accordance with this disclosure. Similar to the embodiment of FIG. 3, data processing system 400 includes an interchange network 402, an acquirer computing system 404, and an issuing bank computing system 406. Acquirer computing system 404 further includes an acquirer edge node computing system 408 and is communicatively coupled to merchants 410A-D. Acquirer computing system 404 and merchants 410A-D are generally part of an acquirer network 412. Similarly, issuing bank computing system 406 may be part of an issuing bank network 414. Issuing bank computing system 406 further includes an issuing bank edge node computing system 416.

In the embodiment depicted in FIG. 4 secondary processing of authorization request messages may occur at either of acquirer edge node computing system 408 and issuing bank edge node computing system 416. For example, an authorization request message sent from acquirer computing system 412 to issuing bank computing system 406 may be subject to secondary processing at acquirer edge node computing system 408 as the authorization request message is transmitted from acquirer computing system 412, or may be subject to secondary processing at issuing bank edge node computing system 416 as the authorization request message is received at issuing bank computing system 406. Similarly, an authorization request message sent by issuing bank computing system 406 may be subject to secondary processing by issuing bank edge node computing system 416 as the authorization request message is transmitted or may be subject to secondary processing by acquiring bank edge node computing system 408 when the authorization request message is received by acquirer edge node computing system 408. In certain embodiments, secondary processing may be distributed between each of acquirer edge node computing system 408 and issuing bank edge node computing system 416. For example, a first set of one or more secondary processing tasks may be performed at acquirer edge node computing system 408 which may then transmit an enhanced authorization request message to issuing bank edge node computing system 416. Issuing bank edge node computing system 416 may then perform and a second set of one or more secondary processing tasks on the enhanced authorization request message.

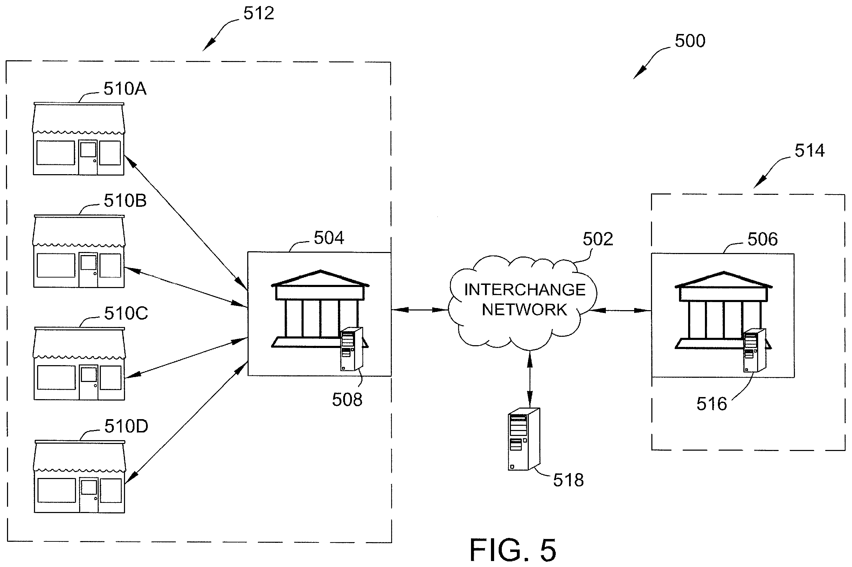

FIG. 5 depicts a third embodiment of a data processing system 500 in accordance with this disclosure. Similar to the embodiments of FIGS. 3 and 4, data processing system 500 includes an interchange network 502, an acquirer computing system 504, and an issuing bank computing system 506. Acquirer computing system 504 further includes an acquirer edge node computing system 508 and is communicatively coupled to merchants 510A-D. Acquirer computing system 404 and merchants 510A-D are generally part of an acquirer network 512. Similarly, issuing bank computing system 506 may be part of an issuing bank network 514. Issuing bank computing system 506 further includes an issuing bank edge node computing system 516. Interchange network 502 further includes a central hub 518.

In the embodiment depicted in FIG. 5 secondary processing of authorization request messages may occur at any of acquirer edge node computing system 508, issuing bank edge node computing system 516, and central hub 518. For example, an authorization request message sent from acquirer computing system 512 to issuing bank computing system 506 may be subject to secondary processing at acquirer edge node computing system 508 as the authorization request message is transmitted from acquirer computing system 512, or may be subject to secondary processing at one or both of issuing bank edge node computing system 516 and central hub 518. Similarly, an authorization request message sent by issuing bank computing system 506 may be subject to secondary processing by issuing bank edge node computing system 516 as the authorization request message is transmitted or may be subject to secondary processing by one or both of acquiring bank edge node computing system 508 or central hub 518. In certain embodiments, secondary processing may be distributed between edge node computing system 508, issuing bank edge node computing system 516, and central hub 518. For example, a first set of one or more secondary processing tasks may be performed at acquirer edge node computing system 508 which may then transmit an enhanced authorization request message to issuing bank edge node computing system 516. As the enhanced message travels over interchange network 502, central hub may perform a second set of secondary processing tasks on the enhanced authorization request message and generate a further enhanced authorization request message. Central hub 518 may then transmit the further enhanced authorization request message to issuing bank edge node computing system 516, which may then perform a third set of one or more secondary processing tasks on the further enhanced authorization request message.

### EXAMPLE OF A METHOD FOR OPTIMIZING TRAVEL BOOKINGS

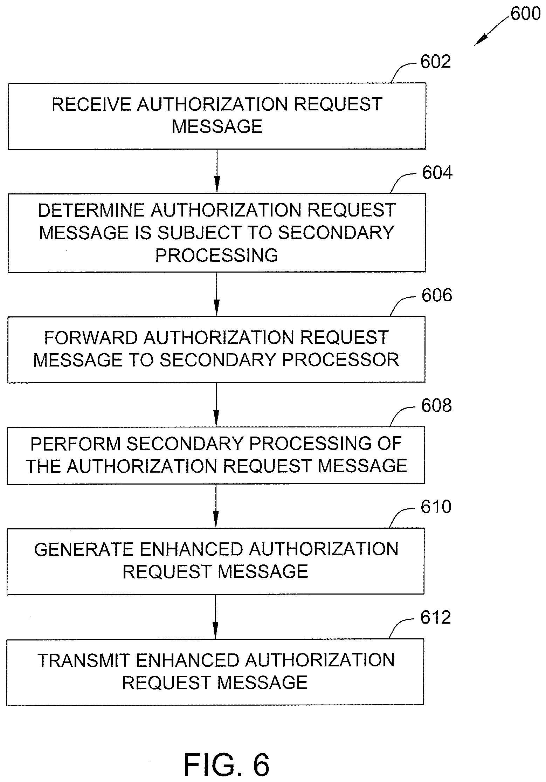

FIG. 6 is a diagram illustrating an example of a method 600 for secondary processing of data performed by an edge node computing system, such as edge node computing system 200 of FIG. 2.

Method 600 includes receiving an authorization request message 610 at the edge node computing system. In embodiments in which the edge node computing system is located at an edge node of an interchange network corresponding to an acquirer, the authorization request message may be received from a merchant associated with the acquirer and may generally correspond to a payment card transaction between the merchant and a cardholder. In embodiments in which the edge node computing system is associated with an issuing bank, the authorization request message may be received by the edge node computing system over the interchange network.

In certain embodiments, the authorization request message may be a message conforming to one or more standards. Such standards may include, but are not limited to ISO 8583 and ISO 20022, which generally provide for the format and content of messages related to electronic transactions made by cardholders using payment cards and message transmitted between financial institutions, respectively.

The authorization request message received in step 602 may be an original authorization request message generated by a merchant. The authorization request message may also be an enhanced authorization message corresponding to an authorization request message that had been previously subjected to one or more secondary processings by a different computing system. For example, the authorization request message received in step 602 may have been previously enhanced by at least one of a second edge node computing system or a central hub. For clarity, the current section of this disclosure generally discusses a method for secondary processing of an original authorization request message. Nevertheless, the following discussion should also be understood to cover instances in which the authorization request message received in step 602 has been previously enhanced.

After an authorization request message is received by the edge node computing system, a first processor of the edge node computing system determines whether the authorization request message is subject to secondary processing 604. In certain embodiments, the primary processor may analyze one or more of a data field, a flag, an indicator, and the like, of the authorization request message used to indicated whether the authorization request message is subject to secondary processing. In other embodiments, the primary processor may analyze other data contained in the authorization request message, such as the source or destination of the authorization request message, to determine whether the authorization request message is subject to secondary processing. The primary processor may also determine whether an authorization request message is subject to secondary processing based on data included in the authorization request message corresponding to characteristics of the underlying transaction. For example, the authorization request message may be subject to secondary processing based on the amount of the transaction, whether the transaction was domestic or international, the date and time of the transaction, the location of the transaction, whether the transaction was an online transaction, and the type of merchant taking part in the transaction, any of which may be indicated in the data of the authorization request message.

If the primary processor determines that the authorization request message is subject to secondary processing, the primary processor forwards the authorization request message to a secondary processor 606. After the secondary processor receives the authorization request message, the secondary processor may perform secondary processing of the authorization request message 608.

Performing secondary processing of the authorization request message generally involves parsing the authorization request message or otherwise extracting data from the authorization request message. The extracted data may then be analyzed, used as inputs for other processes, used to perform lookups, and the like, depending on the nature of the secondary processing. In addition to data extracted from the authorization request message, secondary processing may be performed based on data retrieved from other data sources including, but not limited to, storage devices of the edge node computing system and external data storage devices accessible by the edge node computing system.

Following secondary processing, the edge node computing device may generate an enhance authorization request message 610. The enhanced authorization message may be based, at least in part, on the original authorization request message received by the edge node computing system and the result of the secondary processing. In certain embodiments, the enhanced authorization message may be a modified version of the original authorization request. For example, the enhanced authorization message may be the original authorization request message supplemented with additional data or having one or more of its data fields modified based on the results of the secondary processing.

To the extent the original authorization request message includes routing information, generating the enhanced authorization request message may include changing the routing information contained in the original authorization request message. Such rerouting may be beneficial in conserving network bandwidth. For example, an authorization request message is generally sent from an acquirer over an interchange network to an issuing bank as part of the authorization process. To facilitate this transmission, the authorization request message may include routing information, such as a destination address corresponding to the issuing bank. If an edge node computing system located at the acquirer determines that the transaction should be declined, for example by determining that the transaction is likely fraudulent, the edge node computing device may generate an authorization request message having a different destination to avoid unnecessarily transmitting the authorization request message over the interchange network.

After the edge node computing system generates an enhanced authorization message, it may then transmit the enhanced authorization request message 612 accordingly.

Edge node computing system in accordance with embodiments of the present disclosure may perform one or more types of secondary processing on messages received by the edge node computing system. Accordingly, the following examples of secondary processing performed by the edge node computing system are intended to be merely illustrative.

In a first example, the edge node computing system may be used to perform secondary processing corresponding to a virtual card number service. A virtual card number application allows a cardholder to create temporary payment card numbers associated with the cardholder's primary account number and is useful for improving account security. For example, a cardholder may assign an expiration to the virtual card number (based on time, the total of purchases made using the virtual card number, and the like) such that the virtual card number is of only limited use should the virtual card number be stolen or otherwise improperly acquired. In such applications, secondary processing may be required to determine the payment card number associated with the virtual card number or vice versa. To do so, the secondary processor may perform a lookup of an account number contained in the authorization request message in a table that correlates virtual card numbers with actual account numbers. In certain embodiments, the conversion between virtual and actual account numbers may also be provided to the secondary processor as a web service or similar application. In virtual card number applications, the secondary processor may be configured to enhance messages by replacing a payment card number with a virtual card number or vice versa. Such replacement may be performed in addition to other enhancements.

In a second example, the edge node computing system may be used to perform secondary processing corresponding to a fraud detection service. For example, the secondary processor may extract information from the authorization request message corresponding to details of the transaction and payment card account associated with the authorization request message. The secondary processor may then compare those details with historical transaction data, trends, and other data associated with the cardholder to determine whether there is a likelihood of fraud. For example, the secondary processor may identify from the authorization request message one or more characteristics of the transaction such as the location of the transaction or merchant, the amount of the transaction, the type of goods or services purchased, whether the transaction was conducted online or involved physical presentation of a payment card, and the like. The secondary processor may then access similar characteristics from historical transaction data to determine whether the characteristics of the current transaction are incongruous with the historical transaction data. In certain embodiments, the edge node computing system may include a storage device or storage system for storing historical transaction data. In other embodiments, the edge node computing system may access historical transaction data from an external storage device, such as a storage device maintained by a payment processor. In fraud detection applications, the edge node computing system may be configured to enhance messages with results of a fraud detection process. For example, a secondary processor may modify a flag, indicator, or other data to indicate whether a transaction is potentially fraudulent. The secondary processor may also be configured to enhance a message corresponding to a potentially fraudulent message by rerouting the message. For example, instead of routing a message corresponding to a potentially fraudulent transaction from an acquirer to an issuing bank, the second processor may modify routing instructions of the message to return the message to the acquirer.

In a third example, the edge node computing system may be used to perform secondary processing corresponding to a payment card use parameter service. In a payment card use parameter service, a cardholder may set parameters corresponding to one or more of the time, location, and manner in which a payment card account of the cardholder may be used. Such services may be valuable to cardholders who permit others to use their payment card accounts. For example, a cardholder who is a parent may permit a child to user their payment card account or an employer may permit an employee to use a corporate payment card account. Through a payment card use parameter service, a cardholder may establish one or more parameters limiting the use of the payment card. For example, a parent may establish parameters limiting a college-bound child's use of the parent's payment card account to bookstores, office supply stores, and the like within the city in which the child's college campus is located. In embodiments of the present disclosure in which the edge node computing system performs secondary processing corresponding to a payment card use parameter service, the parameters established by the cardholder may be stored in a database or other storage system accessible by the edge node computing system. When the edge node computing system receives a message subject to secondary processing, the edge node computing system may access the parameters and compare them to transaction details contained within the message. The message may then be enhanced to indicate whether the message met or failed the conditions corresponding to the parameters and transmitted accordingly. In certain embodiments, the edge node computing system may be further configured to generate and transmit an alert to the cardholder if the secondary processing determines that the transaction data does not meet the parameter provided by the cardholder.

In a fourth example, the edge node computing system may be used to perform secondary processing corresponding to a loyalty program service. Loyalty programs generally reward cardholders for using payment cards to make purchases. Rewards may be in the form of cash back, redeemable rewards points, frequent-flier miles, and the like. In embodiments of the present disclosure in which the edge node computing system performs secondary processing corresponding to a loyalty program service, the edge node computing system may analyze transaction data contained in a message to determine whether the corresponding transaction qualifies for a loyalty program reward and the amount of such a reward. For example, the edge node computing device may determine that a transaction qualifies for frequent-flyer miles and may calculate the number of frequent-flyer miles to award based on a transaction amount included in the message. The edge node computing system may then enhance the message to indicate that a reward has been given for the transaction and the enhanced message may be forwarded as necessary. In certain embodiments, the edge node computing system may also transmit results of the secondary processing, such as the amount of a reward, to a computing device or storage system associated with the loyalty program.

In a fifth example, the edge node computing system may be used to perform secondary processing corresponding to a money transfer service. A money transfer service generally permits a cardholder to transfer funds from their payment card account to an account of another cardholder. Such transfers may be conducted over the Internet, at automated teller machines (ATMs), in person at a bank branch, via a mobile phone, and the like. In embodiments of the present disclosure in which the edge node computing system performs secondary processing corresponding to a money transfer service, the edge node computing system may recognize a message as corresponding to a money transfer request and perform secondary processing such as generating and sending notifications to the recipient of the money transfer.

In a sixth example, the edge node computing system may be used to perform secondary processing corresponding to a transaction monitoring or tracking service. Transaction monitoring and tracking generally refers to the process of collecting, analyzing, and monitoring transaction data from one or more payment card accounts. Such services may be useful to acquiring banks, merchants, issuing banks, and other entities within a payment card network to better serve the needs of their customers and to improve their products and services. For example, an acquiring bank may obtain monitoring and tracking data corresponding to transaction data received from its merchant customers and use that data to determine transaction metrics such as volume and frequency. Transaction monitoring and tracking may also be useful for a corporate or government entity wishing to track the spending habits of employees given access to a payment card account associated with the entity. In embodiments of the present disclosure in which the edge node computing system performs secondary processing corresponding to a transaction monitoring or tracking service, the edge node computing system may determine that a message is associated with an entity participating in a transaction monitoring or tracking service and then extract any relevant data from the message. The data may then be stored by the edge node computing system locally or remotely. Edge node computing system may also be configured to retrieve additional data from storage to analyze the data contained in the message. The edge node computing system may also generate an enhanced message indicating that the relevant data for the transaction monitoring and tracking has been extracted and processed by the edge node computing system

In a final example, the edge node computing system may be used to perform secondary processing corresponding to a smart card service. Smart cards are generally payment cards having an embedded integrated circuit chip. As part of a payment card transaction, a card reader may retrieve or transfer data to the smart card, allowing for the implementation of advanced security features. For example, the integrated circuit chip may store encryption-related data, such as an encryption key, that may be changed by the card reader every time the payment card is used. In embodiments of the present disclosure in which the edge node computing system performs secondary processing corresponding to a smart card service, the edge node computing system may be used to verify or otherwise analyze information retrieved from a smart card and sent to the edge node computing system as a message. The edge node computing system may then enhance the message by in accordance with the result of the analysis. For example, if an encryption key is provided to the edge node computing system, secondary processing may include applying the encryption key to encrypt or decrypt data and the enhanced message may include the encrypted or decrypted data, respectively. The edge node computing system may also be used to retrieve or generate data to be written to the smart card. For example, in response to a message, the edge node computing system may generate or retrieve an updated encryption key for the smart card and transmit the updated encryption key to a card reader for writing to the smart card. In such embodiments, the updated encryption key may be transmitted as part of an enhanced message or may be transmitted independently of an enhanced message.

### ADDITIONAL CONSIDERATIONS

The computer programs (also known as programs, software, software applications, "apps", or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The "machine-readable medium" and "computer-readable medium," however, do not include transitory signals. The term "machine-readable signal" refers to any signal used to provide machine instructions and/or data to a programmable processor.

As used herein, the terms "card," "transaction card," "financial transaction card," and "payment card" refer to any suitable transaction card, such as a credit card, a debit card, a prepaid card, a charge card, a membership card, a promotional card, a frequent flyer card, an identification card, a gift card, and/or any other device that may hold payment account information, such as mobile phones, Smartphones, personal digital assistants (PDAs), key fobs, and/or computers. Each type of transactions card can be used as a method of payment for performing a transaction. In addition, consumer card account behavior can include, but is not limited to, purchases, management activities (e.g., balance checking), bill payments, achievement of targets (meeting account balance goals, paying bills on time), and/or product registrations (e.g., mobile application downloads).

For example, one or more computer-readable storage media may include computer-executable instructions embodied thereon for performing secondary data processing. In this example, the computing device may include a memory device and a processor in communication with the memory device, and when executed by said processor, the computer-executable instructions may cause the processor to perform a method, such as the method described and illustrated in the example of FIG. 6.

As used herein, a processor may include any programmable system including systems using micro-controllers, reduced instruction set circuits (RISC), application specific integrated circuits (ASICs), logic circuits, and any other circuit or processor capable of executing the functions described herein. The above examples are example only, and are thus not intended to limit in any way the definition and/or meaning of the term "processor."

As used herein, the terms "software" and "firmware" are interchangeable, and include any computer program stored in memory for execution by a processor, including RAM memory, ROM memory, EPROM memory, EEPROM memory, and non-volatile RAM (NVRAM) memory. The above memory types are example only, and are thus not limiting as to the types of memory usable for storage of a computer program.

In one embodiment, a computer program is provided, and the program is embodied on a computer readable medium. In an example, the system is executed on a single computer system, without a connection to a server computer. In a further example, the system is being run in a Windows^{®} environment (Windows is a registered trademark of Microsoft Corporation, Redmond, Washington). In yet another embodiment, the system is run on a mainframe environment and a UNIX^{®} server environment (UNIX is a registered trademark of X/Open Company Limited located in Reading, Berkshire, United Kingdom). The application is flexible and designed to run in various different environments without compromising any major functionality. In some embodiments, the system includes multiple components distributed among a plurality of computing devices. One or more components may be in the form of computer-executable instructions embodied in a computer-readable medium. The systems and processes are not limited to the specific embodiments described herein. In addition, components of each system and each process can be practiced independent and separate from other components and processes described herein. Each component and process can also be used in combination with other assembly packages and processes.

As used herein, an element or step recited in the singular and preceded by the word "a" or "an" should be understood as not excluding plural elements or steps, unless such exclusion is explicitly recited. Furthermore, references to "example embodiment" or "one embodiment" of the present disclosure are not intended to be interpreted as excluding the existence of additional examples that also incorporate the recited features.

This written description uses examples to describe the disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An edge node computing system (200) for processing data communicated over a computer network (202), the network (202) including a first edge node physically co-located with an acquirer computing system and communicatively coupled to a merchant computing system, the edge node computing system (200) comprising:
a primary processor (208) and a secondary processor (210);
wherein the primary processor (208) is located at the first edge node and configured to: (i) receive, from the co-located acquirer computing system or the communicatively coupled merchant computing system, an authorization request message including information identifying a primary account and original routing information, and representing a payment transaction initiated by a cardholder with a merchant, the original routing information comprising a destination address of an issuing bank associated with the cardholder, (ii) perform a primary processing on the authorization request message, (iii) determine that the transaction is subject to a secondary processing, and (iv) route the authorization request message to the secondary processor; and
wherein the secondary processor (210) is located at the first edge node and configured to: (i) receive the authorization request message from the primary processor, (ii) perform the secondary processing on the authorization request message, (iii) generate an enhanced authorization request message based on a result of the secondary processing and the authorization request message, the enhanced authorization request message including a) the information identifying the primary account, b) an indication that the payment transaction is likely fraudulent and has been declined, and c) modified routing information identifying the acquirer or the merchant, and (iv) transmit the enhanced authorization request message based on the modified routing information back to the acquirer or the merchant, rather than according to the original routing information.

2. The edge node computing system of Claim 1, wherein the network further includes a tertiary processor and wherein the secondary processor (210) is further configured to determine that the transaction is subject to a third processing and to transmit the enhanced authorization request message to the tertiary processor over the network (202).

3. The edge node computing system of Claim 2, wherein the computer network (202) further includes a central node, and wherein the central node includes the tertiary processor.

4. The edge node computing system of Claim 2, wherein the network further includes a second edge node and a second edge node computing system corresponding to the second edge node, the second edge node computing system including the tertiary processor.

5. The edge node computing system of Claim **1,** wherein the authorization request message and the enhanced authorization request message are messages conforming to one or more standards to provide for format and content of messages related to electronic transactions made by cardholders using payment cards or messages transmitted between financial institutions.

6. The edge node computing system of Claim **1,** wherein the secondary processing corresponds to one or more of a fraud detection service, a virtual card number service, a payment card use parameter service, a loyalty program service, a money transfer service, a transaction monitoring service, and a smart card service.

7. A computer-implemented method (600) for processing data communicated over a computer network (202), the network (202) including a first edge node physically co-located with an acquirer computing system and communicatively coupled to a merchant computing system, said method implemented using an edge node computing system (200), said method comprising:
receiving (602), at a primary processor (208) located at the first edge node, from the co-located acquirer computing system or the communicatively coupled merchant computing system, an authorization request message including information identifying a primary account and original routing information, and representing a payment transaction initiated by a cardholder with a merchant, the original routing information comprising a destination address of an issuing bank associated with the cardholder;
performing, by the primary processor, a primary processing on the authorization request message;
determining (604), by the primary processor, that the transaction is subject to a secondary processing;
routing the authorization request message to a secondary processor located at the first edge node;
receiving (606), at the secondary processor, the authorization request message from the primary processor;
performing (608), by the secondary processor, the secondary processing on the authorization request message;
generating (610), with the secondary processor, an enhanced authorization request message based on a result of the secondary processing and the authorization request message, the enhanced authorization request message including a) the information identifying the primary account, b) an indication that the payment transaction is likely fraudulent and has been declined, and c) modified routing information identifying the acquirer or the merchant; and
transmitting (612), by the secondary processor, the enhanced authorization request message based on the modified routing information back to the acquirer or the merchant, rather than according to the original routing information.

8. The method of Claim 7, further comprising determining, by one of the primary processor (208) and the secondary processor (210), that the transaction is subject to a third process and wherein transmitting the enhanced authorization request message includes transmitting the enhanced authorization request message to a central node configured to perform the third process.

9. The method of Claim 7, further comprising determining, by one of the primary processor (208) and the secondary processor (210), that the transaction is subject to a third process and wherein transmitting the enhanced authorization request message includes transmitting the enhanced authorization request message to a second edge node computing system configured to perform the third process.

10. The method of Claim 7, wherein the secondary processing corresponds to one or more of fraud detection service, a virtual card number service, a payment card use parameter service, a loyalty program service, a money transfer service, a transaction monitoring service, and a smart card service.

11. A non-transitory computer-readable storage media having computer-executable instructions embodied thereon, when executed by at least one processor in communication with one or more memory devices, the computer executable instructions cause the at least one processor to:
receive (602), at a primary processor (208) located at the first edge node, wherein the first edge node is physically co-located with an acquirer computing system and communicatively coupled to a merchant computing system, from the co-located acquirer computing system or the communicatively coupled merchant computing system, an authorization request message including information identifying a primary account and original routing information, and representing a payment transaction initiated by a cardholder with a merchant, the original routing information comprising a destination address of an issuing bank associated with the cardholder;
perform, by the primary processor, a primary processing on the authorization request message;
determine (604), by the primary processor, that the transaction is subject to a secondary processing;
route the authorization request message to a secondary processor located at the first edge node;
receive (606), at the secondary processor, the authorization request message from the primary processor;
perform (608), by the secondary processor, the secondary processing on the authorization request message;
generate (610), with the secondary processor, an enhanced authorization request message based on a result of the secondary processing and the authorization request message, the enhanced authorization request message including a) the information identifying the primary account, b) an indication that the payment transaction is likely fraudulent and has been declined, and c) modified routing information identifying the acquirer or the merchant; and
transmit (612), by the secondary processor, the enhanced authorization request message based on the modified routing information back to the acquirer or the merchant, rather than according to the original routing information.

## Patentansprüche

1. Randknoten-Rechnersystem (200) zur Verarbeitung von Daten, die über ein Computernetzwerk (202) übertragen werden, wobei das Netzwerk (202) einen ersten Randknoten einschließt, der physisch mit einem Acquirer-Rechnersystem gemeinsam angeordnet und kommunikativ gekoppelt an ein Händler-Rechnersystem ist, das Randknoten-Rechnersystem (200) umfassend:
einen primären Prozessor (208) und einen sekundären Prozessor (210);
wobei der primäre Prozessor (208) an dem ersten Randknoten angeordnet ist und konfiguriert ist zum: (i) Empfangen von dem mitangeordneten Acquirer-Rechnersystem oder dem kommunikativ gekoppelten Händler-Rechnersystem einer Autorisierungsanfragenachricht, die Informationen zur Identifizierung eines Primärkontos und ursprüngliche Routing-Informationen einschließt und eine von einem Karteninhaber bei einem Händler initiierte Zahlungstransaktion repräsentiert, wobei die ursprünglichen Routing-Informationen eine Zieladresse einer mit dem Karteninhaber assoziierten ausgebenden Bank umfassen, (ii) Durchführen einer primären Verarbeitung der Autorisierungsanfragenachricht, (iii) Bestimmen, dass die Transaktion einer sekundären Verarbeitung unterliegt, und (iv) Weiterleiten der Autorisierungsanfragenachricht an den sekundären Prozessor; und
wobei der sekundäre Prozessor (210) an dem ersten Randknoten angeordnet ist und konfiguriert ist zum: (i) Empfangen der Autorisierungsanfragenachricht von dem primären Prozessor, (ii) Durchführen der sekundären Verarbeitung der Autorisierungsanfragenachricht, (iii) Erzeugen einer erweiterten Autorisierungsanfragenachricht basierend auf einem Ergebnis der sekundären Verarbeitung und der Autorisierungsanfragenachricht, wobei die erweiterte Autorisierungsanfragenachricht a) die Informationen, die das Primärkonto identifizieren, b) eine Anzeige, dass die Zahlungstransaktion wahrscheinlich betrügerisch ist und abgelehnt wurde, und c) modifizierte Routing-Informationen, die den Acquirer oder den Händler identifizieren, einschließt, und (iv) Übertragen der erweiterte Autorisierungsanfragenachricht basierend auf den modifizierten Routing-Informationen zurück an den Acquirer oder den Händler, anstatt gemäß den ursprünglichen Routing-Informationen.

2. Randknoten-Rechnersystem nach Anspruch 1, wobei das Netzwerk ferner einen tertiären Prozessor einschließt und wobei der sekundäre Prozessor (210) ferner konfiguriert ist, um zu bestimmen, dass die Transaktion einer dritten Verarbeitung unterliegt, und die erweiterte Autorisierungsanfragenachricht über das Netzwerk (202) an den tertiären Prozessor zu übertragen.

3. Randknoten-Rechnersystem nach Anspruch 2, wobei das Rechnernetzwerk (202) ferner einen zentralen Knoten einschließt, und wobei der zentrale Knoten den tertiären Prozessor einschließt.

4. Randknoten-Rechnersystem nach Anspruch 2, wobei das Netzwerk ferner einen zweiten Randknoten und ein zweites Randknoten-Rechnersystem entsprechend dem zweiten Randknoten einschließt, wobei das zweite Randknoten-Rechnersystem den tertiären Prozessor einschließt.

5. Randknoten-Rechnersystem nach Anspruch 1, wobei die Autorisierungsanfragenachricht und die erweiterte Autorisierungsanfragenachricht Nachrichten sind, die einem oder mehreren Standards entsprechen, um Format und Inhalt von Nachrichten bereitzustellen, die sich auf elektronische Transaktionen beziehen, die von Karteninhabern unter Verwendung von Zahlungskarten durchgeführt werden, oder Nachrichten, die zwischen Finanzinstituten übertragen werden.

6. Randknoten-Rechnersystem nach Anspruch 1, wobei die sekundäre Verarbeitung einem oder mehreren von einem Betrugserkennungsdienst, einem virtuellen Kartennummerndienst, einem Zahlungskartennutzungsparameterdienst, einem Treueprogrammdienst, einem Geldtransferdienst, einem Transaktionsüberwachungsdienst und einem Smartcard-Dienst entspricht.

7. Computer-implementiertes Verfahren (600) zur Verarbeitung von Daten, die über ein Computernetzwerk (202) übertragen werden, wobei das Netzwerk (202) einen ersten Randknoten einschließt, der physisch mit einem Acquirer-Rechnersystem gemeinsam angeordnet und kommunikativ gekoppelt an ein Händler-Rechnersystem ist, wobei das Verfahren unter Verwendung eines Randknoten-Rechnersystems (200) implementiert wird, wobei das Verfahren umfasst:
Empfangen (602), an einem primären Prozessor (208), der sich an dem ersten Randknoten befindet, von dem mitangeordneten Acquirer-Rechnersystem oder dem kommunikativ gekoppelten Händler-Rechnersystem einer Autorisierungsanfragenachricht, die Informationen zur Identifizierung eines primären Kontos und ursprüngliche Routing-Informationen einschließt und eine von einem Karteninhaber mit einem Händler initiierte Zahlungstransaktion darstellt, wobei die ursprünglichen Routing-Informationen eine Zieladresse einer mit dem Karteninhaber assoziierten ausgebenden Bank umfassen;
Durchführen, durch den primären Prozessor, einer primären Verarbeitung der Autorisierungsanfragenachricht;
Bestimmen (604) durch den primären Prozessor, dass die Transaktion einer sekundären Verarbeitung unterliegt;
Weiterleiten der Autorisierungsanfragenachricht an einen sekundären Prozessor, der sich am ersten Randknoten befindet;
Empfangen (606), an dem sekundären Prozessor, der Autorisierungsanfragenachricht vom primären Prozessor;
Durchführen (608), durch den sekundären Prozessor, der sekundären Verarbeitung der Autorisierungsanfragenachricht;
Erzeugen (610), mit dem sekundären Prozessor, einer erweiterten Autorisierungsanfragenachricht basierend auf einem Ergebnis der sekundären Verarbeitung und der Autorisierungsanfragenachricht, wobei die erweiterte Autorisierungsanfragenachricht a) die Informationen zur Identifizierung des primären Kontos, b) eine Angabe, dass die Zahlungstransaktion wahrscheinlich betrügerisch ist und abgelehnt wurde, und c) modifizierte Routing-Informationen zur Identifizierung des Acquirers oder des Händlers einschließt; und
Übertragen (612) der erweiterten Autorisierungsanfragenachricht basierend auf den modifizierten Routing-Informationen durch den sekundären Prozessor zurück an den Acquirer oder den Händler, anstatt gemäß den ursprünglichen Routing-Informationen.

8. Verfahren nach Anspruch 7, ferner umfassend das Bestimmen durch eines von dem primären Prozessor (208) und dem sekundären Prozessor (210), dass die Transaktion einem dritten Prozess unterliegt, und wobei das Übertragen der erweiterten Autorisierungsanfragenachricht das Übertragen der erweiterten Autorisierungsanfragenachricht an einen zentralen Knoten einschließt, der konfiguriert ist, um den dritten Prozess durchzuführen.

9. Verfahren nach Anspruch 7, ferner umfassend das Bestimmen, durch eines von dem primären Prozessor (208) und dem sekundären Prozessor (210), dass die Transaktion einem dritten Prozess unterliegt und wobei das Übertragen der erweiterten Autorisierungsanfragenachricht das Übertragen der erweiterten Autorisierungsanfragenachricht an ein zweites Randknoten-Rechnersystem einschließt, das konfiguriert ist, um den dritten Prozess durchzuführen.

10. Verfahren nach Anspruch 7, wobei die sekundäre Verarbeitung einem oder mehreren von einem Betrugserkennungsdienst, einem virtuellen Kartennummerndienst, einem Zahlungskartennutzungsparameterdienst, einem Treueprogrammdienst, einem Geldtransferdienst, einem Transaktionsüberwachungsdienst und einem Smartcard-Dienst entspricht.

11. Nicht-transitorisches computerlesbares Speichermedium mit darauf verkörperten computerausführbaren Anweisungen, die, wenn sie von mindestens einem Prozessor in Kommunikation mit einer oder mehreren Speichervorrichtungen ausgeführt werden, die computerausführbaren Anweisungen den mindestens einen Prozessor veranlassen zum:
Empfangen (602), an einem primären Prozessor (208), der sich an dem ersten Randknoten befindet, wobei der erste Randknoten physisch gemeinsam mit einem Acquirer-Rechnersystem angeordnet ist und kommunikativ an ein Händler-Rechnersystem gekoppelt ist, von dem mitangeordneten Acquirer-Rechnersystem oder dem kommunikativ gekoppelten Händler-Rechnersystem, einer Autorisierungsanfragenachricht, die Informationen zur Identifizierung eines primären Kontos und ursprüngliche Routing-Informationen einschließt und eine von einem Karteninhaber mit einem Händler initiierte Zahlungstransaktion darstellt, wobei die ursprünglichen Routing-Informationen eine Zieladresse einer mit dem Karteninhaber assoziierten ausgebenden Bank umfassen;
Durchführen, durch den primären Prozessor, einer primären Verarbeitung der Autorisierungsanfragenachricht;
Bestimmen (604), durch den primären Prozessor, dass die Transaktion einer sekundären Verarbeitung unterliegt;
Weiterleiten der Autorisierungsanfragenachricht an einen sekundären Prozessor, der sich am ersten Randknoten befindet;
Empfangen (606), am sekundären Prozessor, der Autorisierungsanfragenachricht vom primären Prozessor;
Durchführen (608), durch den sekundären Prozessor, der sekundären Verarbeitung der Autorisierungsanfragenachricht;
Erzeugen (610), mit dem sekundären Prozessor, einer erweiterten Autorisierungsanfragenachricht basierend auf einem Ergebnis der sekundären Verarbeitung und der Autorisierungsanfragenachricht, wobei die erweiterte Autorisierungsanfragenachricht a) die Informationen zur Identifizierung des primären Kontos, b) eine Angabe, dass die Zahlungstransaktion wahrscheinlich betrügerisch ist und abgelehnt wurde, und c) modifizierte Routing-Informationen zur Identifizierung des Acquirers oder des Händlers einschließt; und
Übertragen (612) der erweiterten Autorisierungsanfragenachricht basierend auf den modifizierten Routing-Informationen durch den sekundären Prozessor zurück an den Acquirer oder den Händler, anstatt gemäß den ursprünglichen Routing-Informationen.

## Revendications

1. Système informatique de nœud périphérique (200) permettant de traiter des données communiquées sur un réseau informatique (202), le réseau (202) comportant un premier nœud périphérique physiquement colocalisé avec un système informatique d'acquéreur et couplé en communication à un système informatique de commerçant, le système informatique de nœud périphérique (200) comprenant :
un processeur primaire (208) et un processeur secondaire (210) ;
dans lequel le processeur primaire (208) est situé au niveau du premier nœud périphérique et configuré pour : (i) recevoir, à partir du système informatique d'acquéreur colocalisé ou du système informatique de commerçant couplé en communication, un message de demande d'autorisation comportant des informations identifiant un compte principal et des informations d'acheminement d'origine, et représentant une transaction de paiement initiée par un titulaire de carte avec un commerçant, les informations d'acheminement d'origine comprenant une adresse de destination d'une banque émettrice associée au titulaire de carte, (ii) réaliser un traitement primaire sur le message de demande d'autorisation, (iii) déterminer que la transaction est soumise à un traitement secondaire, et (iv) acheminer le message de demande d'autorisation au processeur secondaire ; et
dans lequel le processeur secondaire (210) est situé au niveau du premier nœud périphérique et configuré pour : (i) recevoir le message de demande d'autorisation à partir du processeur primaire, (ii) réaliser le traitement secondaire sur message de demande d'autorisation, (iii) générer un message de demande d'autorisation amélioré en fonction d'un résultat du traitement secondaire et du message de demande d'autorisation, le message de demande d'autorisation amélioré comportant a) les informations identifiant le compte primaire, b) une indication selon laquelle la transaction de paiement est probablement frauduleuse et a été refusée, et c) des informations d'acheminement modifiées identifiant l'acquéreur ou le commerçant, et (iv) transmettre le message de demande d'autorisation amélioré en fonction des informations d'acheminement modifiées à l'acquéreur ou au commerçant, plutôt que selon les informations d'acheminement d'origine.

2. Système informatique de nœud périphérique selon la revendication 1, dans lequel le réseau comporte en outre un processeur tertiaire et dans lequel le processeur secondaire (210) est en outre configuré pour déterminer que la transaction est soumise à un troisième traitement et pour transmettre le message de demande d'autorisation amélioré au processeur tertiaire sur le réseau (202).

3. Système informatique de nœud périphérique selon la revendication 2, dans lequel le réseau informatique (202) comporte en outre un nœud central, et dans lequel le nœud central comporte le processeur tertiaire.

4. Système informatique de nœud périphérique selon la revendication 2, dans lequel le réseau comporte en outre un second nœud périphérique et un second système informatique de nœud périphérique correspondant au second nœud périphérique, le second système informatique de nœud périphérique comportant le processeur tertiaire.

5. Système informatique de nœud périphérique selon la revendication 1, dans lequel le message de demande d'autorisation et le message de demande d'autorisation amélioré sont des messages conformes à une ou plusieurs normes pour fournir un format et un contenu des messages relatifs aux transactions électroniques effectuées par des titulaires de carte à l'aide de cartes de paiement ou de messages transmis entre des institutions financières.

6. Système informatique de nœud périphérique selon la revendication 1, dans lequel le traitement secondaire correspond à un ou plusieurs parmi un service de détection de fraude, un service de numéro de carte virtuelle, un service de paramètre d'utilisation de carte de paiement, un service de programme de fidélité, un service de transfert d'argent, un service de surveillance de transaction et un service de carte à puce intelligente.

7. Procédé mis en œuvre par ordinateur (600) permettant de traiter des données communiquées sur un réseau informatique (202), le réseau (202) comportant un premier nœud périphérique physiquement colocalisé avec un système informatique d'acquéreur et couplé en communication à un système informatique de commerçant, ledit procédé étant mis en œuvre à l'aide d'un système informatique de nœud périphérique (200), ledit procédé comprenant :
la réception (602), au niveau d'un processeur primaire (208) situé au niveau du premier nœud périphérique, à partir du système informatique d'acquéreur colocalisé ou du système informatique de commerçant couplé en communication, d'un message de demande d'autorisation comportant des informations identifiant un compte primaire et des informations d'acheminement d'origine, et représentant une transaction de paiement initiée par un titulaire de carte avec un commerçant, les informations d'acheminement d'origine comprenant une adresse de destination d'une banque émettrice associée au titulaire de carte ;
la réalisation, par le processeur primaire, d'un traitement primaire sur le message de demande d'autorisation ;
le fait de déterminer (604), par le processeur primaire, que la transaction est soumise à un traitement secondaire ;
l'acheminement du message de demande d'autorisation vers un processeur secondaire situé au niveau du premier nœud périphérique ;
la réception (606), au niveau du processeur secondaire, du message de demande d'autorisation à partir du processeur primaire ;
la réalisation (608), par le processeur secondaire, du traitement secondaire sur le message de demande d'autorisation ;
la génération (610), avec le processeur secondaire, d'un message de demande d'autorisation amélioré en fonction d'un résultat du traitement secondaire et du message de demande d'autorisation, le message de demande d'autorisation amélioré comportant a) les informations identifiant le compte primaire, b) une indication selon laquelle la transaction de paiement est probablement frauduleuse et a été refusée, et c) des informations d'acheminement modifiées identifiant l'acquéreur ou le commerçant ; et
la transmission (612), par le processeur secondaire, du message de demande d'autorisation amélioré en fonction des informations d'acheminement modifiées à l'acquéreur ou au commerçant, plutôt que selon les informations d'acheminement d'origine.

8. Procédé selon la revendication 7, comprenant en outre le fait de déterminer, par l'un parmi le processeur primaire (208) et le processeur secondaire (210), que la transaction est soumise à un troisième processus et dans lequel la transmission du message de demande d'autorisation amélioré comporte la transmission du message de demande d'autorisation amélioré à un nœud central configuré pour réaliser le troisième processus.

9. Procédé selon la revendication 7, comprenant en outre le fait de déterminer, par l'un parmi le processeur primaire (208) et le processeur secondaire (210), que la transaction est soumise à un troisième processus et dans lequel la transmission du message de demande d'autorisation amélioré comporte la transmission du message de demande d'autorisation amélioré à un second système informatique de nœud périphérique configuré pour réaliser le troisième processus.

10. Procédé selon la revendication 7, dans lequel le traitement secondaire correspond à un ou plusieurs parmi un service de détection de fraude, un service de numéro de carte virtuelle, un service de paramètre d'utilisation de carte de paiement, un service de programme de fidélité, un service de transfert d'argent, un service de surveillance de transaction et un service de carte à puce intelligente.

11. Support de stockage non transitoire lisible par ordinateur sur lequel sont incorporées des instructions exécutables par ordinateur, lorsqu'elles sont exécutées par au moins un processeur en communication avec un ou plusieurs dispositifs de mémoire, les instructions exécutables par ordinateur amènent l'au moins un processeur à :
recevoir (602), au niveau d'un processeur primaire (208) situé au niveau du premier nœud périphérique, dans lequel le premier nœud périphérique est physiquement colocalisé avec un système informatique d'acquéreur et couplé en communication à un système informatique de commerçant, à partir du système informatique d'acquéreur colocalisé ou du système informatique de commerçant couplé en communication, un message de demande d'autorisation comportant des informations identifiant un compte primaire et des informations d'acheminement d'origine, et représentant une transaction de paiement initiée par un titulaire de carte avec un commerçant, les informations d'acheminement d'origine comprenant une adresse de destination d'une banque émettrice associée au titulaire de carte ;
réaliser, par le processeur primaire, un traitement primaire sur le message de demande d'autorisation ;
déterminer (604), par le processeur primaire, que la transaction est soumise à un traitement secondaire ;
acheminer le message de demande d'autorisation vers un processeur secondaire situé au niveau du premier nœud périphérique ;
recevoir (606), au niveau du processeur secondaire, le message de demande d'autorisation à partir du processeur primaire ;
réaliser (608), par le processeur secondaire, le traitement secondaire sur le message de demande d'autorisation ;
générer (610), avec le processeur secondaire, un message de demande d'autorisation amélioré en fonction d'un résultat du traitement secondaire et du message de demande d'autorisation, le message de demande d'autorisation amélioré comportant a) les informations identifiant le compte primaire, b) une indication selon laquelle la transaction de paiement est probablement frauduleuse et a été refusée, et c) des informations d'acheminement modifiées identifiant l'acquéreur ou le commerçant ; et
transmettre (612), par le processeur secondaire, le message de demande d'autorisation amélioré en fonction des informations d'acheminement modifiées à l'acquéreur ou au commerçant, plutôt que selon les informations d'acheminement d'origine.
